# EUROPEAN PATENT APPLICATION

(11) **EP 2 873 872 A1**
(43) Date of publication of application: **20.05.2015**
(21) Application number: 13184988.7
(22) Date of filing: 18.09.2013
(51) Int. Cl.: F15B 21/04

(54) **Implement carrier with improved control of hydraulic fluid supply**

(71) Applicant: Alfred Kärcher GmbH & Co. KG, 71364 Winnenden (DE)
(72) Inventor: Wagner, Ronny, 573 95 Ydre (SE)
(74) Representative: Simonsson, Erik

(57) **Abstract**

An implement carrier comprises an implement hydraulic system (44) adapted to supply hydraulic fluid to an implement (12). The implement hydraulic system (44) comprises an implement circuit (106) via which hydraulic fluid may be pumped to the implement (12) to power the same, and at least one of: a recirculation circuit (110) via which hydraulic fluid may bypass the implement (12), and a controllable variable flow implement hydraulic pump (38). A temperature control system (100) is arranged to compare a measured hydraulic fluid temperature to a minimum temperature of the hydraulic fluid. The temperature control system (100) is arranged to control, when the measured temperature is below the minimum temperature, a recirculation valve (60) to direct the hydraulic fluid pumped by the hydraulic pump (38) through the recirculation circuit (110) and/or the controllable variable flow implement hydraulic pump (38) to reduce the flow of hydraulic fluid pumped thereby.

## Description

### Technical Field of the Invention

The present invention relates to an implement carrier comprising an implement hydraulic system adapted to supply hydraulic fluid to at least a first implement connectable to the implement carrier, wherein the implement hydraulic system comprises at least a first implement hydraulic pump arranged to be driven by an internal combustion engine and to supply pressurized hydraulic fluid to the implement hydraulic system and further to the at least a first implement.

The present invention further relates to a method of controlling an implement carrier comprising an implement hydraulic system adapted to supply hydraulic fluid to a first implement connectable to the implement carrier.

### Background of the Invention

An implement carrier may be utilized for grass mowing, clearing away snow, street sweeping, cleaning of commercial facilities etc. Depending on the present task the implement carrier is connected to a suitable implement, such as a cutting deck, flail mower, snow thrower, rotating brush, floor cleaner, etc. and the implement carrier operator then performs the desired task. Hence, the implement carrier is arranged for flexibility, and a variety of different implements can be connected to a front and/or rear part of the implement carrier.

DE 10 2010 040 849 A1 discloses an implement carrier which is provided with an internal combustion engine that drives one or more hydraulic pumps. The hydraulic pumps provide a flow of pressurized hydraulic fluid which is utilized for operating the implements.

### Summary of the Invention

An object of the present invention is to provide an implement carrier which is more efficient in operating the implements attached thereto compared to the prior art implement carriers.

This object is achieved by means of an implement carrier comprising an implement hydraulic system adapted to supply hydraulic fluid to at least a first implement connectable to the implement carrier, wherein the implement hydraulic system comprises at least a first implement hydraulic pump arranged to be driven by an internal combustion engine and to supply pressurized hydraulic fluid to the implement hydraulic system and further to the at least a first implement, wherein the implement hydraulic system comprises an implement circuit via which hydraulic fluid may be pumped by the first implement hydraulic pump to the first implement to power the same, and further comprises at least one of:
i) a recirculation circuit via which hydraulic fluid may by-pass the first implement and be returned directly to a storage tank for hydraulic fluid, and
ii) the first implement hydraulic pump having the form of a
   controllable variable flow first implement hydraulic pump,
   wherein the implement hydraulic system further comprises at least one temperature sensor arranged for measuring a temperature indicative of the temperature of the hydraulic fluid to be supplied to the first implement, and a temperature control system arranged to compare the measured temperature to a lower set point indicating a minimum temperature of the hydraulic fluid, wherein the temperature control system is arranged to control, when the measured temperature is below the lower set point, at least one of:
i) a recirculation valve to direct the hydraulic fluid pumped by the first implement hydraulic pump through the recirculation circuit, and
ii) the controllable variable flow first implement hydraulic pump to reduce the flow of hydraulic fluid pumped thereby.

An advantage of this implement carrier is that operation of the implement is hindered in situations when the temperature of the hydraulic fluid is too low. A low hydraulic fluid temperature results in high fluid viscosity which increases the wear on the implement drive motors. Hence, the present implement carrier increases the life of the implements connectable thereto.

According to one embodiment, the implement hydraulic system comprises the recirculation circuit via which hydraulic fluid may by-pass the first implement and be returned directly to a storage tank for hydraulic fluid, and also comprises the temperature control system being arranged to control, when the measured temperature is below the lower set point, the recirculation valve to direct the hydraulic fluid pumped by the first implement hydraulic pump through the recirculation circuit. An advantage of this embodiment is that hydraulic fluid can be recirculated by the pump. The recirculation by the pump causes a heating of the hydraulic fluid, which results in a shorter time until the hydraulic fluid reaches a temperature which is above the lower set point.

According to one embodiment the implement hydraulic system comprises the first implement hydraulic pump having the form of a controllable variable flow first implement hydraulic pump, and also comprises the temperature control system being arranged to control, when the measured temperature is below the lower set point, the controllable variable flow first implement hydraulic pump to reduce the flow of hydraulic fluid pumped thereby. An advantage of this embodiment is that energy may be saved, since the controllable variable flow first implement hydraulic pump will consume little or no energy when it has been regulated down to a reduced flow. Hence, during that period when the measured temperature is below the lower set point the implement carrier will have lower energy consumption.

According to one embodiment the temperature control system is adapted for automatic control of the implement hydraulic system. An advantage of this embodiment is that the implement hydraulic system works also in the absence of instructions from the operator to protect the implement by controlling a recirculation of the hydraulic fluid, and/or a reduction in the hydraulic fluid pumped by a controllable variable implement hydraulic pump, when the temperature is below the lower set point.

According to one embodiment the implement hydraulic system comprises both the recirculation circuit via which hydraulic fluid may by-pass the first implement and be returned directly to a storage tank for hydraulic fluid, and the first implement hydraulic pump having the form of a controllable variable flow first implement hydraulic pump. An advantage of this embodiment is that maximum freedom of controlling the operation is obtained. Hence, it is possible to forward the hydraulic fluid via the recirculation circuit when a fast heating of the hydraulic fluid is desired, and to reduce the flow of hydraulic fluid pumped by the controllable variable flow first implement hydraulic pump when there is a desire to save energy.

According to one embodiment the temperature control system is arranged to compare the measured temperature to an upper set point indicating a maximum temperature of the hydraulic fluid, wherein the temperature control system is arranged to control, when the measured temperature is above the upper set point, at least one of:
i) the recirculation valve to direct the hydraulic fluid pumped by the first implement hydraulic pump through the recirculation circuit, and
ii) the controllable variable flow first implement hydraulic pump to reduce the flow of hydraulic fluid pumped thereby.

An advantage of this embodiment is that operation of the implement is hindered when the hydraulic fluid temperature is too high. A high hydraulic fluid temperature increases the thermal wear on gaskets and sealings of the implement.

According to one embodiment the implement carrier comprises a first implement hydraulic pump connected to a first recirculation valve, a first implement circuit and a first recirculation circuit, and/or the first implement hydraulic pump being a controllable variable flow first implement hydraulic pump, and a second implement hydraulic pump connected to a second recirculation valve, a second implement circuit and a second recirculation circuit, and/or the second implement hydraulic pump being a controllable variable flow second implement hydraulic pump, wherein the temperature control unit is arranged to control, when the measured temperature is below the lower set point, both the first and the second recirculation valves and/or both the first and second controllable variable flow implement hydraulic pumps to direct the hydraulic fluid pumped by the respective implement hydraulic pump through the respective recirculation circuit and/or to reduce the flow of hydraulic fluid pumped by the implement hydraulic pumps. An advantage of this embodiment is that a greater flexibility is achieved, since the implement carrier may have more than one implement connected thereto, and/or operate both high power and low power implements in an efficient manner. By controlling both the first and the second recirculation valves and/or the first and second controllable variable flow implement hydraulic pumps the wear on all implements connected to the implement carrier is reduced.

According to one embodiment the temperature control unit is arranged to control both the first and the second recirculation valves to direct the hydraulic fluid pumped by the respective implement hydraulic pump through the respective recirculation circuit, and/or to control the first and second controllable variable flow implement hydraulic pumps to reduce the flow of hydraulic fluid pumped thereby, when the measured temperature is above the upper set point. An advantage of this embodiment is that the wear on the implements is reduced also when the hydraulic fluid temperature is too high.

According to one embodiment the implement carrier further comprises a temperature sensor arranged for measuring a temperature of the hydraulic fluid in a hydraulic fluid storage tank from which the hydraulic fluid is pumped by the first implement hydraulic pump. An advantage of this embodiment is that a reliable and yet simple measurement of the relevant hydraulic fluid temperature is achieved.

According to one embodiment the temperature control unit is arranged to control a hydraulic fluid cooler arranged for cooling the hydraulic fluid of the implement hydraulic system, wherein the temperature control unit is arranged for reducing the cooling efficiency of the cooler when the measured temperature is below the lower set point. An advantage of this embodiment is that the hydraulic fluid may quicker reach a suitable temperature, i.e., a temperature which is above the lower set point, when the cooling of the hydraulic fluid is reduced. The control of the cooling efficiency may involve controlling the amount and/or temperature of a cooling medium, such as ambient air or water that is circulated in the hydraulic fluid cooler. The control may also involve controlling a by-pass line via which at least a portion of the hydraulic fluid is made to by-pass the cooler. These methods of reducing the cooling efficiency of the cooler have been found to be efficient from both a cost and an energy perspective.

According to one embodiment the temperature control unit is arranged to control an electric heater for heating the hydraulic fluid. An advantage of this embodiment is that fast heating of the hydraulic fluid to a temperature above the lower set point is obtained.

According to one embodiment the at least one recirculation valve is a three-way valve. An advantage of this embodiment is that three-way valves are efficient, with regard to cost and installation, for shifting a flow of hydraulic fluid from one circuit, for example the recirculation circuit, to another circuit, for example the implement circuit.

According to one embodiment the recirculation valve is arranged for preventing any flow of hydraulic fluid through the implement circuit when the recirculation valve directs the hydraulic fluid pumped by the first implement hydraulic pump through the recirculation circuit. An advantage of this embodiment is that the implement is not even idle running, or running at a slow speed, which it could be if a small amount of hydraulic fluid had been supplied thereto. Hence, the wear on the implement is further reduced.

According to one embodiment the controllable variable flow first implement hydraulic pump is arranged for being controlled to preventing any flow of hydraulic fluid through the implement circuit when the temperature control system controls the controllable variable flow first implement hydraulic pump to reduce the flow of hydraulic fluid pumped thereby. An advantage of this embodiment is that the implement is not even idle running, or running at a slow speed, which it could be if a small amount of hydraulic fluid had been supplied thereto. Hence, the wear on the implement is further reduced.

According to one embodiment a propulsion hydraulic pump is driven by the engine for pumping hydraulic fluid to a hydraulic drive motor arranged for driving a drive wheel of the implement carrier, wherein the propulsion hydraulic pump is separate from the at least a first implement hydraulic pump, and is arranged for pumping hydraulic fluid in a propulsion hydraulic system which is separate from the implement hydraulic system. An advantage of this embodiment is that the implement carrier can still be forwarded, for example driven on a road, while the temperature of the hydraulic fluid is unsuitable for operating the implement. Furthermore, since the propulsion hydraulic pump is operated for propulsion of the implement carrier the propulsion hydraulic pump will also heat the hydraulic fluid. Thereby, the hydraulic fluid may faster reach a temperature which is above the lower set point.

According to one embodiment the implement hydraulic system and the propulsion hydraulic system are separate from each other with respect to operation and control, but are both connected to the same hydraulic fluid tank. An advantage of this embodiment is that less equipment is needed, since one tank is sufficient. Furthermore, the hydraulic fluid will be heated quicker.

According to one embodiment the implement carrier comprises a front part and a rear part held together by means of an articulated joint, wherein at least a first implement is connectable to the front part and at least a second implement is connectable to the rear part. An advantage of this embodiment is that this type of implement carriers is very flexible and suitable for carrying implements, such as cutting decks, flail mowers, snow throwers, cleaning machines, etc. in narrow environments, such as parks, residential areas, and inside facilities.

According to one embodiment the implement hydraulic system is arranged for simultaneously supplying hydraulic fluid to a first implement connectable to the front part and a second implement connectable to the rear part of the implement carrier. An advantage of this embodiment is that extra efficient operation can be achieved by the implement carrier operating two implements simultaneously.

A further object of the present invention is to provide an efficient method of controlling an implement carrier.

This object is achieved by means of a method of controlling an implement carrier comprising an implement hydraulic system adapted to supply hydraulic fluid to at least a first implement connectable to the implement carrier, wherein the implement hydraulic system comprises at least a first implement hydraulic pump arranged to be driven by an internal combustion engine and to supply pressurized hydraulic fluid to the implement hydraulic system and further to the at least a first implement, the method comprising:
measuring a temperature indicative of the temperature of the hydraulic fluid to be supplied to the first implement,
comparing the measured temperature to a lower set point indicating a minimum temperature of the hydraulic fluid,
controlling, as long as the measured temperature is below the lower set point, at least one of:
   i) the hydraulic fluid to be recirculated from the first implement hydraulic pump, via a recirculation circuit via which hydraulic fluid by-passes the first implement, directly to a storage tank for hydraulic fluid, and
   ii) a first implement hydraulic pump being a controllable variable flow first implement hydraulic pump to reduce the flow of hydraulic fluid pumped thereby , and
   allowing the hydraulic fluid from the first implement hydraulic pump to be forwarded, via an implement circuit, to the first implement to power the same when the measured temperature exceeds the lower set point.

An advantage of this method is that the implement is not operated when the hydraulic fluid has such a low temperature that it may result in excessive wear to the implement.

According to one embodiment the method further comprises comparing the measured temperature to an upper set point indicating a maximum temperature of the hydraulic fluid,
controlling, as long as the measured temperature is above the upper set point, at least one of:
i) the hydraulic fluid to be recirculated from the first implement hydraulic pump, via the recirculation circuit such that hydraulic fluid by-passes the first implement, directly to a storage tank for hydraulic fluid, and
ii) a first implement hydraulic pump being a controllable variable flow first implement hydraulic pump to reduce the flow of hydraulic fluid pumped thereby, and
allowing the hydraulic fluid from the first implement hydraulic pump to be forwarded, via the implement circuit, to the first implement to power the same when the measured temperature falls below the upper set point.

An advantage of this embodiment is that operation of the implement is hindered when the hydraulic fluid is of such high temperature that it may result in excessive wear to the implement.

According to one embodiment the method further comprises controlling a hydraulic fluid cooler cooling the hydraulic fluid to operate at a reduced cooling capacity when the measured temperature is lower than the lower set point. An advantage of this embodiment is that the hydraulic fluid may faster reach a temperature which is above the lower set point.

According to one embodiment a propulsion hydraulic pump, which is separate from the first implement hydraulic pump, is driven by the engine for pumping hydraulic fluid to at least one hydraulic drive motor arranged for driving a drive wheel of the implement carrier, wherein the propulsion hydraulic pump pumps hydraulic fluid in a propulsion hydraulic system, which is separate from the implement hydraulic system, also when the hydraulic fluid from the first implement hydraulic pump is controlled, because the measured temperature is below the lower set point, to be recirculated via the recirculation circuit such that hydraulic fluid by-passes the at least a first implement and/or when the flow of hydraulic fluid from the controllable variable flow first implement hydraulic pump is controlled to be reduced. An advantage of this embodiment is that the implement carrier can be forwarded also when the hydraulic fluid temperature is below the lower set point. Furthermore, the propulsion hydraulic pump may assist in heating the hydraulic fluid.

According to one embodiment the implement carrier comprises a first implement hydraulic pump connected to a first recirculation valve, a first implement circuit and a first recirculation circuit, and/or the first implement hydraulic pump being a controllable variable flow first implement hydraulic pump, and a second implement hydraulic pump connected to a second recirculation valve, a second implement circuit and a second recirculation circuit, and/or the second implement hydraulic pump being a controllable variable flow second implement hydraulic pump, wherein the step of controlling the hydraulic fluid as long as the measured temperature is below the lower set point involves directing the hydraulic fluid pumped by the respective first and second implement hydraulic pump through the respective recirculation circuit, and/or to reduce the flow of hydraulic fluid pumped by the variable flow implement hydraulic pumps. An advantage of this embodiment is that all implements connected to the implement carrier will be protected from wear caused by hydraulic fluid having a temperature lower than the lower set point.

According to one embodiment the lower set point is selected to be in the range of 0-20°C. This range has proven to be a good combination of low wear to the implements and high efficiency in operating the implement carrier for performing its desired task, such as mowing a lawn, removing snow, or cleaning an indoor facility.

According to one embodiment the second upper set point is in the range of 70-100°C. This range has been found to suitable for avoiding undue thermal stress exerted by the hydraulic fluid on the implement.

Further objects and features of the present invention will be apparent from the following detailed description and claims.

### Brief description of the Drawings

The invention is described in more detail below with reference to the appended drawings in which:
Fig. 1 is a schematic side view of an articulated implement carrier.
Fig. 2 is a schematic illustration of a hydraulic system of the implement carrier of Fig. 1.
Fig. 3 is a schematic diagram illustrating a principle of controlling the articulated implement carrier.

### Description of Preferred Embodiments

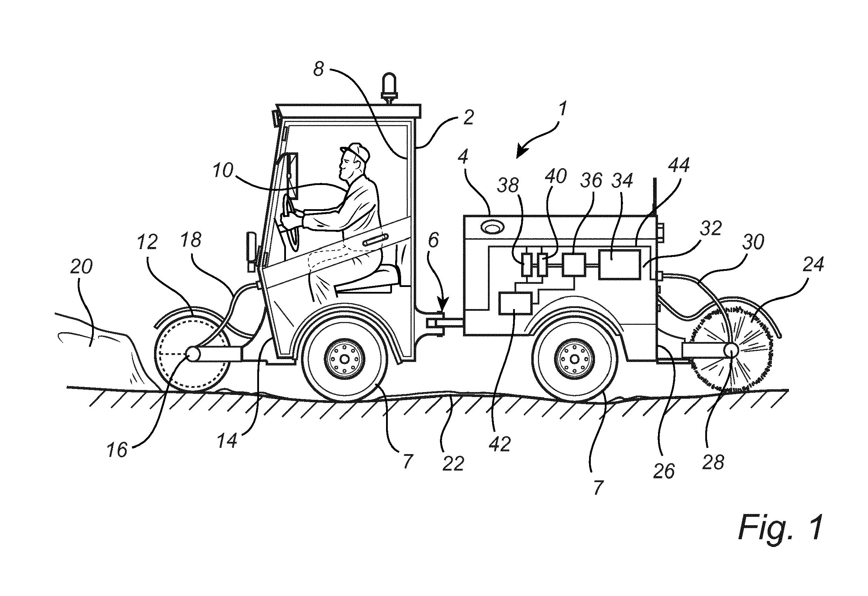

Fig. 1 illustrates an articulated implement carrier 1. The implement carrier 1 comprises a front part 2 and a rear part 4. The front part 2 and the rear part 4 are held together by means of an articulation joint 6 making it possible for the front and rear parts 2, 4 to partly turn and twist along vertical and horizontal axis of rotation. The front and rear part 2, 4 is each provided with two wheels 7. The front part 2 comprises a cabin 8 in which an operator 10 may sit and operate the implement carrier 1.

The implement carrier 1 is arranged for carrying one or more implements. In the embodiment illustrated in Fig. 1 a first implement 12 is attached to a front end 14 of the front part 2. The first implement 12 may, for example, be a snow thrower 12. The snow thrower 12 comprises a hydraulic motor 16 which is connected, via a hydraulic fluid line 18, to a hydraulic system of the implement carrier, as will be described in more detail hereinafter. The snow thrower 12 may, for example, be used for removing snow 20 from a street 22.

A second implement 24 is attached to a rear end 26 of the rear part 4. The second implement 24 may, for example, be a rotating brush 24. The rotating brush 24 comprises a hydraulic motor 28 which is connected, via a hydraulic fluid line 30, to the hydraulic system of the implement carrier 1. The rotating brush 24 may, for example, be used for brushing away any residual snow from the street 22.

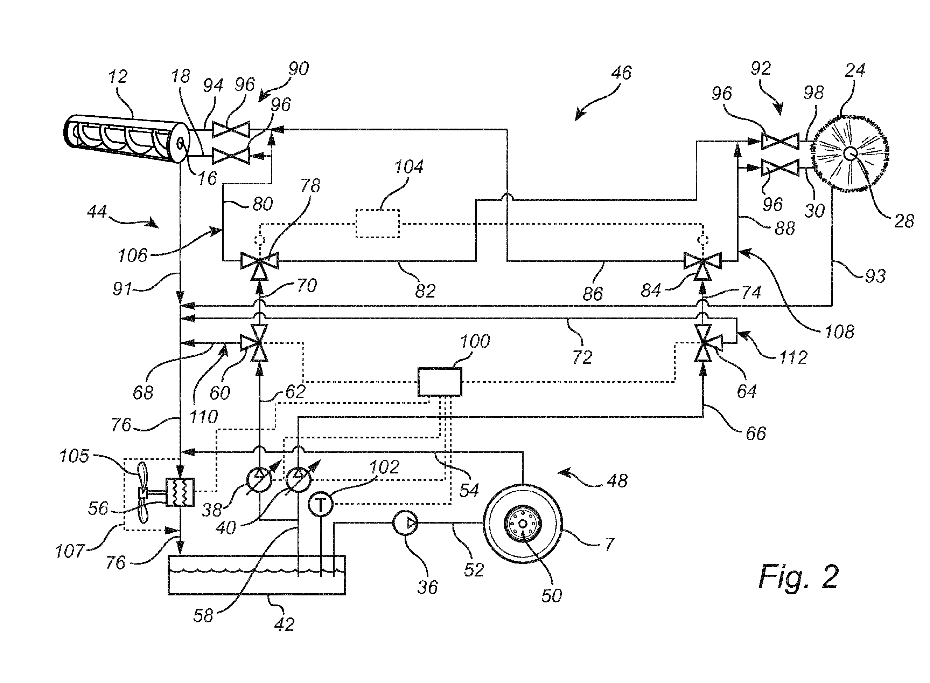

The rear part 4 comprises an engine compartment 32, which is shown in cross-section in Fig. 1. An internal combustion engine 34, for example a diesel engine or a petrol engine, is arranged in the engine compartment 32. The engine 34 is operative to drive a number of hydraulic pumps. According to one embodiment the implement carrier 1 comprises a propulsion hydraulic pump 36, a first implement hydraulic pump 38 and a second implement hydraulic pump 40 that are all driven by the engine 34. The engine 34 may drive the hydraulic pumps 36, 38, 40 by means of a drive shaft, by means of one or more drive belts, or by other suitable means. The hydraulic pumps 36, 38, 40 are connected to a hydraulic fluid tank 42. The first and second implement hydraulic pumps 38, 40 are parts of an implement hydraulic system 44 which will be described in more detail hereinafter with reference to Fig. 2.

Fig. 2 illustrates an implement carrier hydraulic system 46. The implement carrier hydraulic system 46 comprises the implement hydraulic system 44 and a propulsion hydraulic system 48. The implement hydraulic system 44 and the propulsion hydraulic system 48 are separate from each other with respect to operation and control, but are both connected to the hydraulic fluid tank 42 which is, hence, common to the two hydraulic systems 44,48.

The propulsion hydraulic system 48 comprises the propulsion hydraulic pump 36, a hydraulic drive motor connected to each of the wheels 7 of the implement carrier 1, wherein only one hydraulic drive motor 50 arranged for driving the wheel 7 is illustrated in Fig. 2 for purposes of maintaining clarity of illustration. The propulsion hydraulic pump 36 is adapted for supplying pressurized hydraulic fluid to the drive motor 50 for forwarding the implement carrier 1 in a desired direction. The hydraulic pump 36 pumps the fluid from the tank 42 to the drive motor 50 via a supply line 52, and the hydraulic fluid is returned to the tank 42 via a return line 54. Optionally the hydraulic fluid could be returned via a hydraulic fluid cooler 56 arranged for cooling the hydraulic fluid.

The implement hydraulic system 44 comprises the first and second implement hydraulic pumps 38, 40 that are arranged to pump hydraulic fluid from the tank 42 via a common suction line 58. The first implement hydraulic pump 38 is arranged to pump hydraulic fluid, at a pressure, to a first three-way recirculation control valve 60 via a supply line 62. The second implement hydraulic pump 40 is arranged to pump hydraulic fluid, at a pressure, to a second three-way recirculation control valve 64 via a supply line 66.

Each of the first and second three-way valves 60, 64 can have two modes, a recirculation mode and an implement mode. The first three-way valve 60 is connected to a recirculation line 68 and a first implement supply line 70. The second three-way valve 64 is connected to a recirculation line 72 and a second implement supply line 74. When the respective valve 60, 64 is set in the recirculation mode the hydraulic fluid is directed to the respective recirculation line 68, 72 and is returned, via a central return line 76, to the tank 42, optionally via the hydraulic fluid cooler 56. Hence, when the respective recirculation control valve 60, 64 is set in the recirculation mode the hydraulic fluid is circulated from the tank 42 via the suction line 58 through the respective pump 38, 40, via the supply lines 62, 66, further to the recirculation control valves 60, 64 and then via the recirculation lines 68, 72 back to the tank 42 via the central return line 76.

The first implement supply line 70 is connected to a first three-way implement selector valve 78. The first three-way implement selector valve 78 is connected to a first front implement supply line 80 and a first rear implement supply line 82.

The second implement supply line 74 is connected to a second three-way implement selector valve 84. The second three-way implement selector valve 84 is connected to a second front implement supply line 86 and a second rear implement supply line 88.

Each of the first and second implement selector valves 78, 84 can be set to supply hydraulic flow to the respective front 80, 86 or rear 82, 88 implement supply line. Thereby, for example, if the first implement selector valve 78 is set to be open to the first front implement supply line 80 then hydraulic fluid will be supplied, by the first implement hydraulic pump 38, to a front fluid supply arrangement 90 arranged at the front part 2 of the implement carrier 1. Furthermore, if the second implement selector valve 84 is set to be open to the second rear implement supply line 88 then hydraulic fluid will be supplied, by the second implement hydraulic pump 40, to a rear fluid supply arrangement 92 arranged at the rear part 4 of the implement carrier 1. However, it is also possible to direct the hydraulic fluid from both implement hydraulic pumps 38, 40 to the same implement. Thus, for example, if the first implement selector valve 78 is set to be open to the first front implement supply line 80, and the second implement selector valve 84 is set to be open to the second front implement supply line 86, then hydraulic fluid will be supplied, by both implement hydraulic pumps 38, 40, to the front fluid supply arrangement 90 and further to the first implement 12, which thus receives the double capacity of hydraulic fluid.

The front fluid supply arrangement 90 typically comprises one fluid line, for example the hydraulic fluid line 18, for supply of hydraulic fluid to an implement from one hydraulic pump, and another fluid line 94 for supply of hydraulic fluid to an implement from both hydraulic pumps, and valves 96 arranged for selecting the suitable fluid line. Similarly, the rear fluid supply arrangement 92 typically comprises one fluid line, for example the hydraulic fluid line 30, for supply of hydraulic fluid to an implement from one hydraulic pump, and another fluid line 98 for supply of hydraulic fluid to an implement from both hydraulic pumps, and valves 96 arranged for selecting the suitable fluid line.

Hydraulic fluid that has been used in the hydraulic motor 16 of the first implement 12 is returned to the tank 42 via a front fluid return line 91 and the central return line 76, optionally also via the hydraulic fluid cooler 56. Similarly, hydraulic fluid that has been used in the hydraulic motor 28 of the second implement 24 is returned to the tank 42 via a rear fluid return line 93 and the central return line 76, optionally also via the hydraulic fluid cooler 56.

The implement hydraulic system 44 further comprises a temperature control system 100 and at least one temperature sensor 102. Furthermore, the implement hydraulic system 44 may also comprise an implement supply control system 104. The implement supply control system 104 controls the implement selector valves 78 and 84 so that a desired amount of hydraulic fluid is supplied to the front and rear fluid supply arrangements 90, 92. The implement supply control system 104 could be a computer based system, but could also be a mechanical setting system. A further possibility is for the operator 10 to manually set the valves 78, 84 to the desired setting.

The temperature control system 100, which may typically be a microcomputer based system, is arranged for receiving a signal from the temperature sensor 102. The temperature sensor 102 is arranged for measuring the temperature of the hydraulic fluid in the tank 42 and for sending a signal indicating the present temperature to the control system 100. The control system 100 compares the temperature measured by the temperature sensor 102 to a first, lower, set point and a second, upper, set point. The first lower set point relates to a temperature below which the hydraulic fluid has such high viscosity that it may cause unwanted wear to the hydraulic motors 16, 28 of the implements 12, 24. The first lower set point is typically related to the type of hydraulic fluid that is used. For example, the lower set point could be in the range of 0-20°C. In accordance with one embodiment the lower set point is 10°C. The second upper set point relates to a temperature above which the hydraulic fluid has such low viscosity that it may cause unwanted wear to the hydraulic motors 16, 28 of the implements 12, 24. The second upper set point is typically related to the type of hydraulic fluid that is used. For example, the upper set point could be in the range of 70-100°C. In accordance with one embodiment the first lower set point is 10°C, and the second upper set point is 85°C.

If the temperature measured by the temperature sensor 102 is lower than the lower set point, i.e. lower than for example 10°C, the temperature control system 100 forces the first three-way recirculation control valve 60 and the second three-way recirculation control valve 64 to shift to their recirculation modes, regardless of any other settings. Thereby, the hydraulic fluid pumped by the first hydraulic pump 38 is directed, via the first recirculation valve 60, the recirculation line 68 and the central return line 76, back to the tank 42 without previously passing through any of the implements, and the hydraulic fluid pumped by the second hydraulic pump 40 is directed, via the second recirculation valve 64, the recirculation line 72 and the central return line 76, back to the tank 42 without previously passing through any of the implements. As an effect of such recirculation of hydraulic fluid, and also as an effect of the propulsion hydraulic pump 36 pumping hydraulic fluid to the hydraulic drive motor 50 arranged for driving the wheel 7, the hydraulic fluid will be gradually heated due to the friction to which the hydraulic fluid is exposed. The state of forcing the hydraulic fluid pumped by pumps 38, 40 to be recirculated back to the tank 42, and by-passing the implements 12, 24, is maintained until the temperature measured by the temperature sensor 102 exceeds the first lower set point. When the temperature exceeds the first lower set point the first and second recirculation control valves 60 and 64 are no longer forced to be in their recirculation modes, but one or both of these valves 60, 64 is allowed to be switched to their implement mode to supply hydraulic fluid to the implement selector valves 78, 84 and further to the implements 12, 24. Such switching of the valves 60, 64 to implement mode could be controlled by the control unit 100, by the control unit 104 or by manually switching the valves.

Optionally, the temperature control unit 100 may also control the hydraulic fluid cooler 56 to reduce the cooling efficiency as long as the temperature of the hydraulic fluid is below the first lower set point. For example, the temperature control unit 100 could control a cooling fan 105, which blows ambient cooling air through the cooler 56, to operate at a reduced rpm to reduce the cooling effect. A further alternative is for the temperature control unit 100 to forward at least a part of the hydraulic fluid in a by-pass line 107 over the cooler 56 as long as the temperature of the hydraulic fluid is below the first lower set point. Thereby, the hydraulic fluid will be heated to its operating temperature faster. According to one embodiment a heater, such as an electrical heater, may be used for heating the hydraulic fluid in the tank 42 for obtaining a quicker heating of the hydraulic fluid. Such a heater could be integrated with the temperature sensor 102 into an integrated temperature measurement and hydraulic fluid heating device.

If, during operation of the implements 12, 24, the temperature sensor 102 detects a temperature which is higher than the second upper set point the temperature control unit 100 forces the recirculation control valves 60 and 64 to shift to their recirculation modes, regardless of any other settings. Thereby, the hydraulic fluid pumped by the first hydraulic pump 38 is directed, via the first recirculation valve 60, the recirculation line 68 and the central return line 76, back to the tank 42 without previously passing through any of the implements, and the hydraulic fluid pumped by the second hydraulic pump 40 is directed, via the second recirculation valve 64, the recirculation line 72 and the central return line 76, back to the tank 42 without previously passing through any of the implements. As an effect of the reduced friction to the hydraulic fluid, since it is not circulated through the implements 12, 24, and optionally also due to the cooling of the hydraulic fluid in the hydraulic fluid cooler 56, the hydraulic fluid will be cooled. The state of forcing the hydraulic fluid pumped by pumps 38, 40 to be recirculated back to the tank 42 without passing through the implements 12, 24 is maintained until the temperature measured by the temperature sensor 102 falls below the second upper set point. When the temperature falls below the second upper set point the first and second recirculation control valves 60 and 64 are no longer forced to be in the recirculation modes, but one or both of these valves 60, 64 may be switched to their implement mode to supply hydraulic fluid to the implement selector valves 78, 84 and further to the implements 12, 24.

Thus, the implement hydraulic system 44 comprises a first implement circuit 106, comprising the lines 62, 70, 80, 82, 91, 93 and 76, via which hydraulic fluid may be supplied by the first implement hydraulic pump 38 to one of the implements 12, 24 to power the same, and a second implement circuit 108, comprising the lines 66, 74, 86, 88, 91, 93 and 76, via which hydraulic fluid may be supplied by the second implement hydraulic pump 40 to one of the implements 12, 24 to power the same. Furthermore, the implement hydraulic system 44 comprises a first recirculation circuit 110, comprising the lines 62, 68, and 76, via which hydraulic fluid may by-pass the implements 12, 24 and be returned directly to the tank 42, and a second recirculation circuit 112, comprising the lines 66, 72, and 76, via which hydraulic fluid may by-pass the implements 12, 24 and be returned directly to the tank 42. The temperature control system 100 controls whether the hydraulic fluid should be pumped via the respective recirculation circuit 110, 112, or if the temperature of the hydraulic fluid is such, in relation to the lower and/or upper set point, that the hydraulic fluid should be allowed to be pumped via one or both of the implement circuits 106, 108.

According to an alternative embodiment the implement hydraulic system 44 comprises the first implement hydraulic pump 38 in the form of a controllable variable flow first implement hydraulic pump 38, and the second implement hydraulic pump 40 in the form of a controllable variable flow second implement hydraulic pump 40. The controllable variable hydraulic pumps 38, 40 are controllable pumps, of per se known type, for which the amount of hydraulic fluid pumped can be controlled independently of the present rpm and power of the engine 34, for example by mechanically or electrically disconnecting the pumps 38, 40 from the engine 34. The temperature control system 100 may be connected to the controllable variable flow implement hydraulic pumps 38, 40 and is arranged to control them, as illustrated in Fig. 2. If the control system 100 finds upon a comparison that the temperature measured by the temperature sensor 102 is lower than the lower set point then the control system 100 may control the controllable variable flow implement hydraulic pumps 38, 40 to reduce the flow of hydraulic fluid pumped thereby. Preferably, the controllable variable flow implement hydraulic pumps 38, 40 are controlled to stop pumping hydraulic fluid, so that little or preferably no hydraulic fluid is pumped to the respective first and second implement circuits 106, 108 as long as the measured temperature is below the lower set point. Similarly, if the control system 100 finds upon a comparison that the temperature measured by the temperature sensor 102 is higher than the upper set point then the control system 100 may control the controllable variable flow implement hydraulic pumps 38, 40 to reduce the flow of hydraulic fluid pumped thereby. Preferably, the variable flow hydraulic pumps 38, 40 are controlled to stop pumping hydraulic fluid, so that little or preferably no hydraulic fluid is pumped to the respective first and second implement circuits 106, 108 as long as the measured temperature is above the upper set point. Hence, arranging controllable variable flow implement hydraulic pumps 38, 40 and controlling them to reduce their flow of hydraulic fluid, or preferably to stop pumping any hydraulic fluid, when the measured temperature is below the lower set point, and preferably also when the measured temperature is above the upper set point, is an alternative embodiment to the use of the first and second recirculation circuits 110, 112 as described hereinbefore.

According to a still further alternative embodiment the implement hydraulic system 44 comprises the first implement hydraulic pump 38 in the form of a controllable variable flow first implement hydraulic pump 38, and the second implement hydraulic pump 40 in the form of a controllable variable flow second implement hydraulic pump 40, and also the first and second recirculation circuits 110, 112. The temperature control system 100 could be arranged for controlling the pumps 38, 40 and/or the recirculation circuits 110, 112 when the measured temperature is below the lower set point and/or the when the measured temperature is above the upper set point. In this way the control system 100 may control, for example, the valves 60, 64 to activate the recirculation circuits 110, 112 when there is a need for relatively quick heating of the hydraulic fluid by recirculating it or when there is a need for relatively quick cooling of the hydraulic fluid, by recirculating the hydraulic fluid via the hydraulic fluid cooler 56. On the other hand the control system 100 may control the controllable variable flow implement hydraulic pumps 38, 40 to reduce the flow of hydraulic fluid when there is a need to save energy, by avoiding circulating any hydraulic fluid when it is not suitable, due to its temperature, for use in the implements. Still further, the control system 100 may also control both the pumps 38, 40 to reduce the flow pumped thereby to some extent, and to control the valves 60, 64 to activate the recirculation circuits 110, 112 such that the reduced amount of hydraulic fluid that is still pumped by the pumps 38, 40 is recirculated directly to the tank 42.

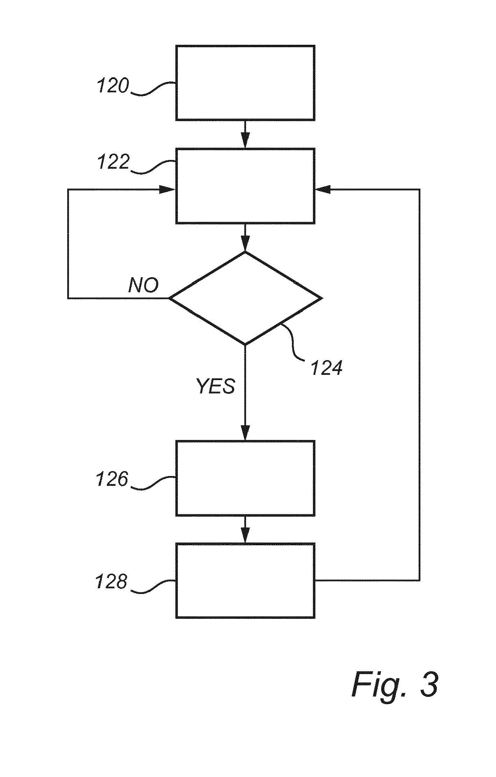

Fig. 3 is a schematic illustration of a manner of controlling the implement hydraulic system 44 shown in Fig. 2.

In a step 120 the implement carrier 1 is started and the engine 34 starts to drive the three hydraulic pumps 36, 38, 40. The recirculation control valves 60 and 64 are in the recirculation mode.

In a step 122 the temperature of the hydraulic fluid is measured by the temperature sensor 102.

In a step 124 the measured temperature of the hydraulic fluid is compared to the first lower set point to verify that the temperature is above this set point. Furthermore, the measured temperature of the hydraulic fluid is compared to the second upper set point to verify that the temperature is below this set point. If the measured temperature is above the first lower set point and is also below the second upper set point then the answer is "YES", and the procedure proceeds to step 126. If the answer is "NO", meaning that the measured temperature is either below the first lower set point or is above the second upper set point, the recirculation control valves 60 and 64 are forced to remain in the recirculation mode, and the procedure returns to step 122.

In step 126 the recirculation control valves 60 and 64 are allowed to enter the implement mode.

In step 128 the implements 12, 24 are operated.

The procedure involves regularly returning to step 122 to measure the temperature of the hydraulic fluid, and to check, in step 124, that the temperature is above the first lower set point, and is below the second upper set point. If the answer in step 124 would be "NO", then the recirculation control valves 60 and 64 are forced to switch to the recirculation mode.

It will be appreciated that in the alternative embodiment in which the implement hydraulic system 44 comprises controllable variable flow first and second implement hydraulic pumps 38, 40 then step 120 could involve having the hydraulic pumps 38, 40 operating at a reduced flow of hydraulic flow, or preferably with no flow of hydraulic fluid at all. Step 126 would then involve allowing the controllable variable flow implement hydraulic pumps 38, 40 to start pumping hydraulic fluid to the implement circuits 106, 108.

It will be appreciated that numerous variants of the embodiments described above are possible within the scope of the appended claims.

Hereinbefore it has been described that the temperature sensor 102 measures the temperature in the hydraulic fluid tank 42. It will be appreciated that a temperature sensor could, as alternative, be arranged in other positions. For example, a temperature sensor could be arranged for measuring the temperature of the hydraulic fluid in the common suction line 58, in one or both of the supply lines 62, 66, or in another position where it is suitable to measure a temperature that is indicative of the temperature of the hydraulic fluid to which the implement is exposed.

Hereinbefore it has been described that the valves 60, 64, 78, 84 are three-way valves. While such valves are often efficient, it will be appreciated that it would also be possible to use other types of valves, including, for example, to use a combination of two two-way valves as alternative to each three-way valve.

Hereinbefore it has been described that the implement hydraulic system 44 is provided with a first and a second implement hydraulic pump, 38, 40. It will be appreciated that an implement hydraulic system 44 could be provided with other numbers of implement hydraulic pumps. For example, the implement hydraulic system 44 could comprise anything from 1 to 8 implement hydraulic pumps.

To summarize, an implement carrier comprises an implement hydraulic system (44) adapted to supply hydraulic fluid to an implement (12). The implement hydraulic system (44) comprises an implement circuit (106) via which hydraulic fluid may be pumped to the implement (12) to power the same, and at least one of: a recirculation circuit (110) via which hydraulic fluid may by-pass the implement (12), and a controllable variable flow implement hydraulic pump (38). A temperature control system (100) is arranged to compare a measured hydraulic fluid temperature to a minimum temperature of the hydraulic fluid. The temperature control system (100) is arranged to control, when the measured temperature is below the minimum temperature, a recirculation valve (60) to direct the hydraulic fluid pumped by the hydraulic pump (38) through the recirculation circuit (110) and/or the controllable variable flow implement hydraulic pump (38) to reduce the flow of hydraulic fluid pumped thereby.

## Claims

1. An implement carrier comprising an implement hydraulic system (44) adapted to supply hydraulic fluid to at least a first implement (12) connectable to the implement carrier, wherein the implement hydraulic system (44) comprises at least a first implement hydraulic pump (38) arranged to be driven by an internal combustion engine (34) and to supply pressurized hydraulic fluid to the implement hydraulic system (44) and further to the first implement (12), **characterised in** the implement hydraulic system (44) comprising an implement circuit (106) via which hydraulic fluid may be pumped by the first implement hydraulic pump (38) to the first implement (12) to power the same, and further comprising at least one of:
i) a recirculation circuit (110) via which hydraulic fluid may by-pass the first implement (12) and be returned directly to a storage tank (42) for hydraulic fluid, and
ii) the first implement hydraulic pump (38) having the form of a controllable variable flow first implement hydraulic pump (38),
wherein the implement hydraulic system (44) further comprises at least one temperature sensor (102) arranged for measuring a temperature indicative of the temperature of the hydraulic fluid to be supplied to the first implement (12), and a temperature control system (100) arranged to compare the measured temperature to a lower set point indicating a minimum temperature of the hydraulic fluid, wherein the temperature control system (100) is arranged to control, when the measured temperature is below the lower set point, at least one of:
i) a recirculation valve (60) to direct the hydraulic fluid pumped by the first implement hydraulic pump (38) through the recirculation circuit (110), and
ii) the controllable variable flow first implement hydraulic pump (38) to reduce the flow of hydraulic fluid pumped thereby.

2. An implement carrier according to claim 1, wherein the temperature control system (100) is arranged to compare the measured temperature to an upper set point indicating a maximum temperature of the hydraulic fluid, wherein the temperature control system (100) is arranged to control, when the measured temperature is above the upper set point, at least one of:
i) the recirculation valve (60) to direct the hydraulic fluid pumped by the first implement hydraulic pump (38) through the recirculation circuit (110), and
ii) the controllable variable flow first implement hydraulic pump (38) to reduce the flow of hydraulic fluid pumped thereby.

3. An implement carrier according to any one of the preceding claims, wherein the implement carrier comprises a first implement hydraulic pump (38) connected to a first recirculation valve (60), a first implement circuit (106) and a first recirculation circuit (110), and/or the first implement hydraulic pump (38) being a controllable variable flow first implement hydraulic pump (38), and a second implement hydraulic pump (40) connected to a second recirculation valve (64), a second implement circuit (108) and a second recirculation circuit (112), and/or the second implement hydraulic pump (40) being a controllable variable flow second implement hydraulic pump (40), wherein the temperature control unit (100) is arranged to control, when the measured temperature is below the lower set point, both the first and the second recirculation valves (60, 64) and/or both the first and the second controllable variable flow implement hydraulic pumps (38, 40) to direct the hydraulic fluid pumped by the respective implement hydraulic pump (38, 40) through the respective recirculation circuit (110, 112) and/or to reduce the flow of hydraulic fluid pumped by the implement hydraulic pumps (38, 40).

4. An implement carrier according to any one of the preceding claims, wherein the implement carrier (1) further comprises a temperature sensor (102) arranged for measuring a temperature of the hydraulic fluid in a hydraulic fluid storage tank (42) from which the hydraulic fluid is pumped by the first implement hydraulic pump (38).

5. An implement carrier according to any one of the preceding claims, wherein the temperature control unit (100) is arranged to control a hydraulic fluid cooler (56) arranged for cooling the hydraulic fluid of the implement hydraulic system (44), wherein temperature control unit (100) is arranged for reducing the cooling efficiency of the cooler (56) when the measured temperature is below the lower set point.

6. An implement carrier according to any one of the preceding claims, wherein the recirculation valve (60) is arranged for preventing any flow of hydraulic fluid through the implement circuit (106) when the recirculation valve (60) directs the hydraulic fluid pumped by the first implement hydraulic pump (38) through the recirculation circuit (110).

7. An implement carrier according to any one of the preceding claims, wherein the controllable variable flow first implement hydraulic pump (38) is arranged for being controlled to preventing any flow of hydraulic fluid through the implement circuit (106) when the temperature control system (100) controls the controllable variable flow first implement hydraulic pump (38) to reduce the flow of hydraulic fluid pumped thereby.

8. An implement carrier according to any one of the preceding claims, wherein a propulsion hydraulic pump (36) is driven by the engine (34) for pumping hydraulic fluid to a hydraulic drive motor (50) arranged for driving a drive wheel (7) of the implement carrier (1), wherein the propulsion hydraulic pump (36) is separate from the at least a first implement hydraulic pump (38), and is arranged for pumping hydraulic fluid in a propulsion hydraulic system (48) which is separate from the implement hydraulic system (44).

9. An implement carrier according to any one of the preceding claims,
wherein the implement carrier comprises a front part (2) and a rear part (4) held together by means of an articulation joint (6), wherein at least a first implement (12) is connectable to the front part (2) and at least a second implement (24) is connectable to the rear part (4).

10. A method of controlling an implement carrier comprising an implement hydraulic system (44) adapted to supply hydraulic fluid to at least a first implement (12) connectable to the implement carrier (1), wherein the implement hydraulic system (44) comprises at least a first implement hydraulic pump (38) arranged to be driven by an internal combustion engine (34) and to supply pressurized hydraulic fluid to the implement hydraulic system (44) and further to the at least a first implement (12), the method comprising:
measuring a temperature indicative of the temperature of the hydraulic fluid to be supplied to the first implement (12),
comparing the measured temperature to a lower set point indicating a minimum temperature of the hydraulic fluid,
controlling, as long as the measured temperature is below the lower set point, at least one of:
i) the hydraulic fluid to be recirculated from the first implement hydraulic pump (38), via a recirculation circuit (110) via which hydraulic fluid by-passes the first implement (12), directly to a storage tank (42) for hydraulic fluid, and
ii) the first implement hydraulic pump (38) being a controllable variable flow first implement hydraulic pump (38) to reduce the flow of hydraulic fluid pumped thereby,
and
allowing the hydraulic fluid from the first implement hydraulic pump (38) to be forwarded, via an implement circuit (106), to the first implement (12) to power the same when the measured temperature exceeds the lower set point.

11. A method according to claim 10, further comprising
comparing the measured temperature to an upper set point indicating a maximum temperature of the hydraulic fluid,
controlling, as long as the measured temperature is above the upper set point, at least one of:
i) the hydraulic fluid to be recirculated from the first implement hydraulic pump (38), via the recirculation circuit (110) such that hydraulic fluid by-passes the first implement (12), directly to a storage tank (42) for hydraulic fluid, and
ii) the first implement hydraulic pump (38) being a controllable variable flow first implement hydraulic pump (38) to reduce the flow of hydraulic fluid pumped thereby ,
and
allowing the hydraulic fluid from the first implement hydraulic pump (38) to be forwarded, via the implement circuit (106), to the first implement (12) to power the same when the measured temperature falls below the upper set point.

12. A method according to any one of claims 10-11, further comprising controlling a hydraulic fluid cooler (56) cooling the hydraulic fluid to operate at a reduced cooling capacity when the measured temperature is lower than the lower set point.

13. A method according to any one of claims 10-12, wherein a propulsion hydraulic pump (36), which is separate from the first implement hydraulic pump (38), is driven by the engine (34) for pumping hydraulic fluid to at least one hydraulic drive motor (50) arranged for driving a drive wheel (7) of the implement carrier (1), wherein the propulsion hydraulic pump (36) pumps hydraulic fluid in a propulsion hydraulic system (48), which is separate from the implement hydraulic system (44), also when the hydraulic fluid from the first implement hydraulic pump (38) is controlled, because the measured temperature is below the lower set point, to be recirculated via the recirculation circuit (110) such that hydraulic fluid by-passes the at least a first implement (12) and/or when the flow of hydraulic fluid from the controllable variable flow first implement hydraulic pump (38) is controlled to be reduced.

14. A method according to any one of claims 10-13, wherein the implement carrier comprises a first implement hydraulic pump (38) connected to a first recirculation valve (60), a first implement circuit (106) and a first recirculation circuit (110), and/or the first implement hydraulic pump (38) being a controllable variable flow first implement hydraulic pump (38), and a second implement hydraulic pump (40) connected to a second recirculation valve (64), a second implement circuit (108) and a second recirculation circuit (112), and/or the second implement hydraulic pump (40) being a controllable variable flow second implement hydraulic pump (40), wherein the step of controlling the hydraulic fluid as long as the measured temperature is below the lower set point involves directing the hydraulic fluid pumped by the respective first and second implement hydraulic pump (38, 40) through the respective recirculation circuit (110, 112), and/or to reduce the flow of hydraulic fluid pumped by the variable flow implement hydraulic pumps (38, 40).

15. A method according to any one of claims 10-14, wherein the lower set point is selected to be in the range of 0-20°C.
